# EUROPEAN PATENT APPLICATION

(11) **EP 2 055 446 A1**
(43) Date of publication of application: **06.05.2009**
(21) Application number: 07119734.7
(22) Date of filing: 31.10.2007
(51) Int. Cl.: B25J 13/02, B25J 13/06, G05B 19/427

(54) **A portable robot control apparatus and a method for controlling a movement of a robot**

(71) Applicant: ABB AS, 1396 Billingstad (NO)
(72) Inventor: Henne, Tormod, 4306 Sandnes (NO); Molaug, Anders, 4340 Bryne (NO)
(74) Representative: Dahlstrand, Björn

(57) **Abstract**

A portable robot control apparatus (1) to control a movement of a robot (10) or of a robot tool end (9) is provided. The portable robot control apparatus comprises an inertial device (6) with at least one acceleration sensor and/or at least one rotation sensor, where said inertial device (6) measures its relative movement and the apparatus (1) sends out to a robot controller (12) a signal (11) representing the relative movement, so that the robot controller (12) is enabled to control the robot (10) in such a way that said relative movement is repeated by the robot (10) or by the robot tool (9) end in real-time.

## Description

### TECHNICAL FIELD

The present invention relates to a portable robot control apparatus to control a movement of a robot or of a robot tool end.

### BACKGROUND ART

Manually controlled movement of a robot arm is used especially during an online programming stage in order to teach a robot to follow an operating path defined by a number of set points. A memory means in a control system may store coordinates of set points as position instructions and other operating instructions which, together with said set points, may define a work cycle of the robot. During automatic running, the robot is controlled in accordance with the information stored in the memory means during the programming stage.

In a control system for an industrial robot, the robot during online programming is often run with the aid of a portable robot control apparatus comprising control means, such as a joystick, which can be manually influenced. Another name often used for the portable robot control apparatus is teach pendant unit (TPU). The robot is successively moved to each of said set points which define the operating path and the operating positions that the robot is to assume during automatic operation. These positions may be stored in the form of a sequence of position instructions in a program memory, i.e. the memory means. In addition to the pure position instructions, other operating instructions are stored in the program memory giving further information about the working cycle of the robot. For example the operating instructions may give information about the desired robot velocity in a certain section of the movement, about control of outputs from the robot to external equipment e.g. to a welding set, about a desired precision of the robot movement, about conditions for the robot movement in dependence on input signals from external sensors or equipments, about events such as switch on/off paint spray, about calls for preprogrammed subroutines, and so on. During automatic operation of the robot, the program instructions are run through successively, and the robot is displaced successively between the different programmed positions in accordance with the position instructions and further carries out the measures which are programmed into the instructions.

The TPU is normally held in one hand, partially rested on the forearm. If the TPU is held in the left hand, the operator controls the joystick in his/her right hand, and moving the joystick in an x or y direction, will cause the robot to move in the x or y direction, and rotating the shaft of the joystick will cause a movement of the robot in the z direction. It is also possible to configure the TPU to move the different axes of the robot separately, from the joystick. With this configuration, moving the joystick in the x and y direction will cause a movement of a first and a second axis of the robot and by rotating the shaft of the joystick a third axis will be moved. A joystick can only be controlled in 3 independent directions, i.e. forward/backward, up/down and rotating left/right, respectively. Due to this 3 degrees of freedom (DOF) nature of the joystick it is not possible with this configuration to move all six axes on a six-axis robot, with only one joystick. However, with a reconfiguration of the joystick, the other three axes of the robot can be affected, analogously.

To be able to move the robot the operator must at the same time activate a live handle for safety purposes. The function of the live handle is to ensure that the TPU is operable and that when the live handle is not activated by the operator the robot does not move if the joystick is moved accidentally.

A current trend in customer-driven robot-based manufacturing implies small series production and requires fast online robot programming. This fact becomes even more apparent in case of small manufacturing shops usually lacking educated offline programmers. As opposed to online programming where the operating path is programmed by successively moving the robot to the set points of said operating path, offline programming is performed without said robot, using computers for simulation of the robot environment.

ABB industrial robots enable online programming by using as TPU an input device based on a touch screen and a joystick. The introduction of the joystick eased the hard work of manual robot control. Nevertheless, due to the 3DOF nature of the TPU mentioned above and its lack of self-positioning with respect to the robot coordinate system, the movement of the robot or the robot tool end is still far from intuitive. The 3DOF nature makes it difficult to perform certain robot movement paths and a lot of reconfigurations are required. The lack of self-positioning with respect to the robot coordinate system will result in a deviation between the coordinate systems of the TPU and the robot, respectively, in case the TPU rotates. Without compensating the coordinate system of the TPU in dependence on the change of orientation, this property will lead to different robot movements, in the TPU coordinate system, for two identical joystick operations, if the TPU has been rotated in between. To overcome these problems programmers often apply a trial and error approach to determine which axis is controlled by which joystick motion and in what direction it will move. The lack of intuition prolongs the programming time and may lead to robot collisions with nearby objects.

One possible solution to eliminate this problem is via force feedback, i.e. a tool is guided through direct contact with the operator's hand, the motion of which is sensed via a 6DOF force sensor (wrist sensor). An example is shown in US 6,212,443 where a teaching apparatus including a force detector is presented. A handle is fixed to the detector and held by the operator to lead the robot in a teaching process. However, due to very high security demands, a remote input device is preferred to keep a certain distance between the operator and the robot.

Another way of dealing with the task of teaching an operating path to the robot defined by a number of set points is provided in US 6,584,378 B1. A method and a device are presented for the determination of coordinates and orientation of an object in a measuring position. The robot itself is not involved in the measuring procedure carried out by the method but the coordinates and orientation are used to define the operation path of the robot. The method enables the determination of coordinates and orientation of the measuring position by calculating the position based on the start position and the relative movement of the object. The relative movement of the object is calculated on the basis of information from accelerometers placed on the object. The start position on the other hand is calculated on the basis of information from one or more cameras. However, there are several disadvantages with this approach. Obviously, an extra measuring device comprising one or more cameras is necessary to perform the determination of the start position and the operator has no visual feedback about the correctness of the robot position or knowledge of the space limitation. The coordinates also have to be transfered to the robot controller prior to tests of the operating path in the real environment.

To be able to overcome the mentioned problems, it is an object of the invention to provide an easier, more human-friendly and intuitive robot control apparatus.

### SUMMARY OF THE INVENTION

According to the invention there is provided a portable robot control apparatus to control a movement of a robot or of a robot tool end and comprising an inertial device with at least one acceleration sensor and/or at least one rotation sensor, where said inertial device measures its relative movement and the apparatus sends out to a robot controller a signal representing the relative movement, so that the robot controller is enabled to control the robot in such a way that said relative movement is repeated by the robot or by the robot tool end in real-time.

Accelerometers are used to sense the translation of the TPU and angular rate sensors, gyroscopes, are used to sense the angular position. The relative translation and rotation of the TPU provides an input to the calculation of the offset of the current absolute position of the robot. The robot will be moved accordingly in real-time.

An advantage of the improved robot control apparatus according to the invention is that the control of the relative movement of the robot with a TPU, comprising inertial measurement means, constitutes an easier, safer and more intuitive way, especially when the operator is moving the robot in more than one direction simultaneously, and particularly when the operator is changing his/her orientation in relation to the robot.

The movement of the TPU and the robot tool end directly correspond to each other in both direction and orientation even after the change of orientation.

Another advantage of the TPU according to the invention is that the user visually observs the complete movement of the robot, as the 6DOF can be changed simultaniously, which implies high security.

The TPU according to the invention has the potential of replacing the existing TPU comprising joysticks. While the joysticks themselves are cheap, the surrounding mechanical arrangements are complicated, e.g. rubber gaskets and seals, sealing rings with screws and fasteners etc. This invention will be totally enclosed in the pendant housing with no protruding parts and hence no sealing issues.

The method and device described in US 6,584,378 B1 are based on similar principles as the invention but there are some important differences:
- The invention involves direct control over the robot as opposed to US 6,584,378 B1.
- The new invention uses the measuring system already in place in the robot, which will take care of all the absolute measurements and space calculations.
- No cameras or other absolute measurement devices are necessary.
- There is direct visual feedback as to where the robot is positioned.
- The operator gets an immediate sense of the space limitations in real-time.
- Any established logical operations can remain unchanged.
- Only a cheap additional component to generate a relative movement is needed.

The invention will also minimize the effect of input response delay in the system. Using joysticks, a response delay will often result in an overshoot because excessive input is applied as the motion is expected to start. Using this invention, 10 cm of TPU movement should result in 10 cm of robot movement, even if delayed.

According to an embodiment of the present invention there is provided a portable robot control apparatus of the kind referred to above wherein the inertial device comprises an inertial measurements unit (IMU) with three accelerometers and three gyroscopes, whose measuring axes are orthogonal to each other, as reference input for control of the relative movement of the robot or robot tool end.

An IMU is a closed system that is used to detect the rate of change of attitude, which can be defined as the rotation angles in 3-dimentional space, and translation. It normally uses a combination of accelerometers and gyroscopes. The term IMU is widely used to refer to a box, containing 3 accelerometers and 3 gyroscopes, featuring 6DOF positioning capability. The accelerometers measure the current rate of acceleration and are placed such that their measuring axes are orthogonal to each other. The gyroscopes measure the rotation rates and are placed such that their measuring axis are orthogonal to each other. Typically, an IMU detects the current acceleration and rate of change in attitude and then sums them to find the total change from the initial position.

According to another embodiment of the present invention there is provided a portable robot control apparatus of the kind referred to above wherein the inertial device comprises an IMU integrated on a chip.

An advantage of the improved robot control apparatus according to the embodiment of the invention is concerning the cost. All essential sensor components are now available on a chip. The development of gaming accessories such as Nintendo Wii has made components available that are small and cheap, e.g. Analog Devices Tri Axis Gyroscope & Accelerometer ADIS16350, and they have become well suited for this type of operation.

According to another embodiment of the present invention there is provided a portable robot control apparatus of the kind referred to above wherein the apparatus is further comprising at least one joystick means as an alternative input for control of the movement of the robot or of the robot tool end. The joystick means can be easily added into the existing hardware.

According to another embodiment of the present invention there is provided a portable robot control apparatus of the kind referred to above wherein the apparatus or TPU is further comprising means for changing a scaling ratio between the movement of the TPU and the robot or robot tool end. The robot will track the motion of the TPU with preset or adaptively changing scale ratio, e.g. with scale ratio 1:10, moving the TPU 10 cm will move the robot by 1 cm. The same manner applies to angular position control by rotating the TPU.

According to another embodiment of the present invention there is provided a portable robot control apparatus of the kind referred to above wherein the portable robot control apparatus, or TPU comprises an activation button, which has to be enabled in order to make a directing relay, or the like, to respond, disconnecting the outputs from the at least one joystick and connecting the output of the inertial device to the TPU controller.

A procedure for an operator to control the robot movement would be as follows:
1. Observe the position of the robot and determine its desired route.
2. Engage the inertial input device by enabling the activation button intended for this purpose and do relative movements with the device.
3. Disable said activation button when done, and if relocation of the device in space is needed to complete the relative movement, go back to step 1, similar to what is done during a mouse pointer movement and the PC mouse reach the end of the desk surface.

According to another embodiment of the present invention there is provided a portable robot control apparatus of the kind referred to above wherein the portable robot control apparatus, or TPU comprises no joysticks but wherein said activation button still has to be enabled in order to engage the inertial device. The procedure for an operator to control the robot movement remains the same as above.

According to another embodiment of the present invention there is provided a portable robot control apparatus of the kind referred to above wherein the portable robot control apparatus, or TPU, further comprises means for adjusting the coordinate system of the TPU to correspond to the coordinate system of the robot.

One of the major advantages with the apparatus according to the invention is that the robot controller receives information about the relative movement of the TPU, thus, when the TPU is rotated, the coordinate system of the TPU is adjusted to correspond to the coordinate system of the robot. This ability of self-positioning regarding to the robot coordinate system enables the operator to change the orientation of the TPU, without losing the intuitive correspondence between the movement of the TPU and the robot tool end, respectively. A certain TPU movement in the robot coordinate system will move the robot in the same direction regardless of the orientation of the TPU.

IMU's and other inertial navigation systems suffer from integration drift. As small errors in the measurement of acceleration and angular velocity are integrated into progressively larger errors in velocity, which is compounded into errors in position, any error in the measurement is accumulated. This leads to drift, or an ever increasing deviation between the coordinate system of the TPU and the actual coordinate system of the robot. Enabling the means according to the embodiment of the invention mentioned above will adjust the coordinate system of the TPU in order to correspond to the coordinate system of the robot.

According to an aspect of the present invention there is provided a method to control the movement of the robot or of the robot tool end using the portable robot control apparatus of the kind referred to above, the method comprising the steps of:
- measuring the relative movement of said apparatus,
- sending out to a robot controller a signal representing the relative movement and
- controlling the robot in such a way that said relative movement is repeated by the robot or by the robot tool end in real-time.

The ability of self-positioning with respect to the robot coordinate system is necessary in order to keep the intuitive correspondence between the movement of the TPU and the robot tool end, respectively. In order to maintain the same coordinate system for the TPU and the robot, the TPU coordinate system has to be adjusted as soon as the TPU is rotating in relation to the robot coordinate system. Consequently, as long as the activation button is disabled while the TPU is rotating, the coordinate system has to be adjusted. If the activation button is enabled, the robot or the robot tool end will translate in accordance with the TPU and its coordinate system will not be adjusted.

According to another aspect of the present invention there is provided a method of the kind referred to above where the method, in case an activation button is disabled, further comprises the step of changing the coordinate system of the portable robot control apparatus in accordance to the relative rotation in order to correspond with the coordinate system of the robot.

According to another aspect of the present invention there is provided a method of the kind referred to above further comprising the step of changing the scaling ratio between the movement of the apparatus and the robot or robot tool end.

According to another aspect of the present invention there is provided a method of the kind referred to above further comprising the steps of placing the portable robot control apparatus in a position which is fixed in relation to the coordinate system of the robot and enabling a means for adjusting the coordinate system of said apparatus in order to correspond with the coordinate system of the robot.

According to another embodiment of the present invention there is provided a robot teaching system comprising a portable robot control apparatus of the kind referred to above and a robot controller wherein said portable robot control apparatus, or TPU, is used to move the robot or the robot tool end in a teaching process to define an operating path.

### BRIEF DESCRIPTION OF THE DRAWINGS

The present invention will be more fully described by way of example with reference to the accompanying drawings in which:
Figure 1 shows a portable robot control apparatus sending out a signal, representing its relative movement, to a robot controller according to an embodiment of the invention,
Figure 2 shows a block diagram of the apparatus including a TPU controller according to an embodiment of the invention,
Figure 3 shows the apparatus controlling a robot upwards according to an embodiment of the invention,
Figure 4 shows the apparatus controlling the robot to the right according to an embodiment of the invention,
Figure 5 shows the apparatus rotating the robot clockwise according to an embodiment of the invention and
Figure 6 shows a robot system comprising the apparatus, the robot controller and the robot according to an embodiment of the invention.

### DESCRIPTION OF THE DRAWINGS

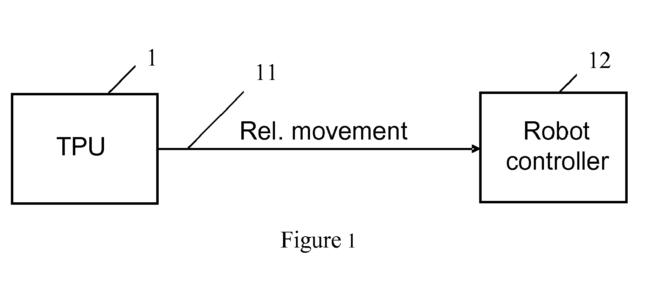

Figure 1 shows a schematic picture of a portable robot control apparatus 1 sending a signal 11, representing the relative movement of the portable robot control apparatus, to a robot controller 12.

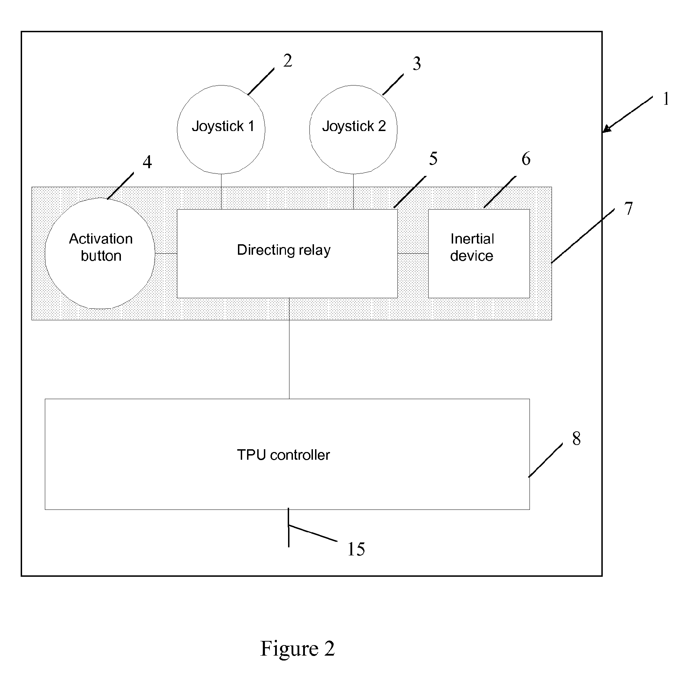

Figure 2 shows a schematic view of an embodiment of the invention. The figure shows the principal build-up of the apparatus 1 comprising members of an inertial robot control means 7, depicted as a shaded box, representing the extra features distinguishing the apparatus, or TPU, from a convential TPU comprising joysticks. The inertial robot control means comprises an activation button 4, for the selection between joystick operation or inertial operation of the robot. By default, without enabling the activation button 4, the joystick operation is active. Enabling said activation button will make a directing relay 5 respond which will disconnect the outputs from at least one joystick 2, 3 and connect the output of an inertial device 6 to a TPU controller 8. The apparatus also comprises an interface 15 to send out the signal 11 to the robot controller 12.

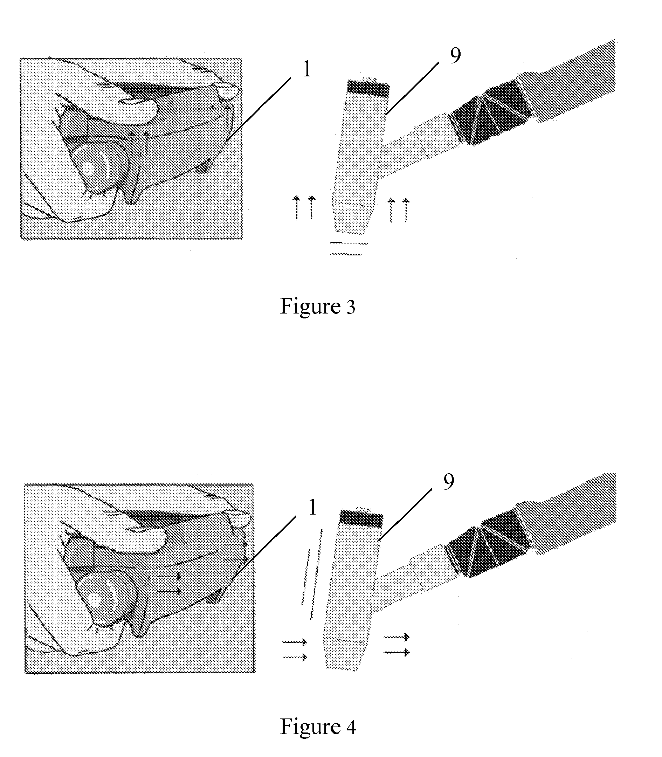

Figure 3 shows a picture where the portable robot control apparatus according to the invention is controlling a robot tool end 9 vertically/upwards in real-time in a master-slave manner. The procedure for controlling the robot movement would be as follows: observe the position of the robot tool end 9 and determine its desired route, engage the inertial device 6 by enabling the activation button 4, perform relative movements with said apparatus 1 and disable said activation button 4 when done, and if relocation of the robot tool end 9 is needed to complete the relative movement, restart from the beginning of the procedure .

Figure 4 shows a picture where the portable robot control apparatus according to the invention is controlling the robot tool end 9 horizontally in real-time in a master-slave manner.

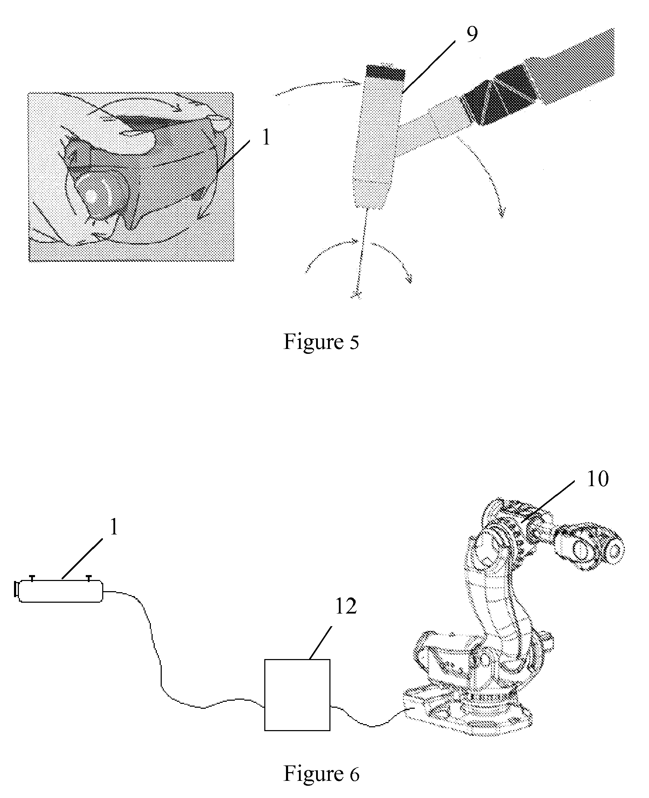

Figure 5 shows a picture where the portable robot control apparatus according to the invention is pivoting the robot tool end 9 in real-time in a master-slave manner.

Figure 6 shows a schematic picture of a robot system comprising the portable robot control apparatus 1, the robot controller 12 and the robot 10.

It should be noted that while the above describes exemplifying embodiments of the invention, there are several variations and modifications which may be made to the disclosed solution without departing from the scope of the present invention as defined in the appended claims.

## Claims

1. A portable robot control apparatus (1) to control a movement of a robot (10) or of a robot tool end (9), **characterised by** comprising an inertial device (6) with at least one acceleration sensor and/or at least one rotation sensor, where said inertial device (6) measures its relative movement and the apparatus (1) sends out to a robot controller (12) a signal (11) representing the relative movement, so that the robot controller (12) is enabled to control the robot (10) in such a way that said relative movement is repeated by the robot (10) or by the robot tool (9) end in real-time.

2. The apparatus according to claim 1, **characterised in that** the inertial device (6) comprises an inertial measurement unit (IMU) with three accelerometers and three gyroscopes, whose measuring axes are orthogonal to each other.

3. The apparatus according to claim 2, **characterised in that** the IMU is integrated on a chip.

4. The apparatus according to any of the preceding claims, **characterised by** further comprising at least one joystick means (2, 3) being an alternative input to the robot controller (12) for controlling the movement of the robot (10) or the robot tool end (9).

5. The apparatus according to any of the preceding claims, **characterised by** further comprising means for changing a scaling ratio between the movement of the apparatus (1) and the robot tool end (9), respectively.

6. The apparatus according to claim 4 or 5, **characterised by** further comprising an activation button (4), to manually select between the output of the inertial device (6) and the output of the at least one joystick (2, 3), respectively.

7. The apparatus according to any of the preceding claims, **characterised by** further comprising means for adjusting a coordinate system of said apparatus (1) to correspond to a coordinate system of the robot.

8. A method to control a movement of a robot (10) or of a robot tool end (9) using a portable robot control apparatus (1), **characterised by**
- measuring the relative movement of said apparatus (1),
- sending out to a robot controller (12) a signal (11) representing the relative movement, and
- controlling the robot (10) in such a way that said relative movement is repeated by the robot (10) or by the robot tool end (9) in real-time.

9. The method according to claim 8, **characterised by**, in case an activation button (4) is disabled, further comprising the step of
- changing the coordinate system of the portable robot control apparatus (1) in accordance to the relative movement.

10. The method according to claim 8 or 9, **characterised by** further comprising the step of
- changing a scaling ratio between the movement of the apparatus (1) and the robot (10) or robot tool end (9).

11. The method according to any of the claims 8 to 10, **characterised by** further comprising the steps of
- placing the portable robot control apparatus (1) in a position which is fixed in relation to the coordinate system of the robot (10) and,
- enabling a means for adjusting the coordinate system of said apparatus (1) to be in accordance with the coordinate system of the robot (10).

12. A robot teaching system for moving the robot (10) or the robot tool end (9) in a teaching process to define an operating path **characterised by** comprising a portable robot control apparatus (1) and a robot controller (12) according to any of the claims 1 to 7.
